(19) Europäisches Patentamt
European Patent Office
Office européen des brevets

(11) Veröffentlichungsnummer: **0 117 492**
**B1**

(12) # EUROPÄISCHE PATENTSCHRIFT

(45) Veröffentlichungstag der Patentschrift: **03.09.86**

(51) Int. Cl.⁴: **C 08 F 210/00**, C 08 F 2/04

(21) Anmeldenummer: **84101625.6**

(22) Anmeldetag: **16.02.84**

(54) **Verfahren zum kontinuierlichen Herstellen partikelförmiger Ethylen-Buten-(1)-Copolymerisate.**

(30) Priorität: **23.02.83 DE 3306249**

(43) Veröffentlichungstag der Anmeldung: **05.09.84 Patentblatt 84/36**

(45) Bekanntmachung des Hinweises auf die Patenterteilung: **03.09.86 Patentblatt 86/36**

(84) Benannte Vertragsstaaten: **AT BE DE FR GB IT**

(56) Entgegenhaltungen: **FR-A-2 147 263**
**US-A-4 007 321**

(73) Patentinhaber: **BASF Aktiengesellschaft, Carl-Bosch- Strasse 38, D-6700 Ludwigshafen (DE)**

(72) Erfinder: **Mueller- Tamm, Heinz, Dr., Ottweilerstrasse 9, D-6700 Ludwigshafen (DE)**
Erfinder: **Schick, Hans, Dr., Am Aubuckel 30, D-6800 Mannheim 51 (DE)**
Erfinder: **Hennenberger, Peter, Dr., Am Mandelgarten 19, D-6713 Freinsheim (DE)**
Erfinder: **Kolk, Erich, Dr., Im Rustengut 14, D-6702 Bad Duerkheim (DE)**

**EP 0 117 492 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung liegt im Rahmen eines Verfahrens zum kontinuierlichen Herstellen partikelförmiger Ethylen-Buten-(1)-Copolymerisate durch katalytische Copolymerisation von Ethylen und Buten-(1) in einem flüssig vorliegenden Alkan - worin sich die zu polymerisierenden Monomeren in gelöster Form, das gebildete partikelförmige Copolymerisat in suspendierter Form befinden - als Reaktionsmedium, mittels eines Ziegler-Katalysatorsystems aus (1) einer Titan enthaltenden Komponente sowie (2) einem Aluminiumtrialkyl, in Gegenwart von Wasserstoff als Molekulargewichtsregler bei erhöhter Temperatur sowie erhöhtem Druck unter Führen des Reaktionsgemischs als Kreisstrom, welchem die Ausgangsstoffe zugegeben werden und das gebildete partikelförmige Copolymerisat entzogen wird.

Polymerisationsverfahren dieser Art, d.h. die sog. Suspensionspolymerisation von $\alpha$-Monoolefinen in einem flüssig vorliegenden Alkan, sind in mannigfachen Ausgestaltungen bekannt; hierzu kann im gegebenen Zusammenhang insbesondere auf die in den GB-PS 841 263 und 1 435 965 sowie den US-PS 3 242 150 und 4 007 321 beschriebenen Arbeitsweisen, als exemplarischen Beispielen, verwiesen werden.

Die bekannten Polymerisationsverfahren haben sich auch - insgesamt gesehen - in der Großtechnik gut bewährt.

Beim Herstellen partikelförmiger Ethylen-Buten-(1)-Copolymerisate lassen die bekannten Verfahren der eingangs definierten Gattung indes noch den einen oder anderen Wunsch offen: So ist es mit ihnen z.B. nicht möglich, Copolymerisate mit wünschenswert guten morphologischen Eigenschaften zu erhalten; - was sich insbesondere auch darin äußert, daß die Copolymerisate einen relativ hohen "Feinstkornanteil" aufweisen, d.h. einen relativ hohen Anteil an Partikeln, die einen Durchmesser von weniger als 0,2 mm haben. Ein solcher Feinstkornanteil ist aber unerwünscht, da er die Weiterverarbeitbarkeit der Copolymerisate nachteilig beeinflußt und sogar Anlaß zu Staubexplosionen sein kann. >er setzt die Aufgabe an, die zur vorliegenden Erfindung geführt hat: Ein - gegenüber den bekannten - technisch fortschrittliches Verfahren der eingangs definierten Gattung aufzuzeigen, mit dem es insbesondere auch möglich ist, Copolymerisate zu erhalten, die wünschenswert gute morphologische Eigenschaften haben, also u.a. einen relativ niederen bis keinen Feinstkornanteil aufweisen und im übrigen eine günstige Korngrößenverteilung im Bereich der gröberen Partikel besitzen.

Es wurde gefunden, daß die gestellte Aufgabe gelöst werden kann, wenn das Verfahren der eingangs definierten Gattung derart ausgestaltet wird, daß man sieben kritische Parameter beachtet und deren Werte in ausgewählten, relativ engen Bereichen hält sowie in bestimmte Relationen zueinander setzt.

Gegenstand der vorliegenden Erfindung ist dementsprechend ein Verfahren zum kontinuierlichen Herstellen partikelförmiger Ethylen-Buten-(1)-Copolymerisate durch katalytische Copolymerisation von Ethylen und Buten-(1) in einem flüssig vorliegenden Alkan - worin sich die zu polymerisierenden Monomeren in gelöster Form, das gebildete partikelförmige Copolymerisat in suspendierter Form befinden - als Reaktionsmedium, mittels eines Ziegler-Katalysatorsystems aus (1) einer Titan enthaltenden Komponente sowie (2) einem Aluminiumtrialkyl, in Gegenwart von Wasserstoff als Molekulargewichtsregler bei erhöhter Temperatur sowie erhöhtem Druck unter Führen des Reaktionsgemischs als Kreisstrom, welchem die Ausgangsstoffe zugegeben werden und das gebildete partikelförmige Copolymerisat entzogen wird.

Das erfindungsgemäße Verfahren ist dadurch gekennzeichnet, daß man

a) als Reaktionsmedium iso-Butan einsetzt,

b) die Menge an monomerem Ethylen im Reaktionsgemisch im Bereich von 6 bis 15, vorzugsweise 12 bis 14 Mol Ethylen pro 100 Mol der im Reaktionsgemisch enthaltenen Gesamtmolmenge von iso-Butan, monomerem Ethylen, monomerem Buten-(1) und Wasserstoff hält,

c) die Menge an monomeren Buten-(1) im Reaktionsgemisch im Bereich von 20 bis 35, vorzugsweise 28 bis 32 Mol Buten-(1) pro 100 Mol der im Reaktionsgemisch enthaltenen Gesamtmolmenge von iso-Butan, monomerem Ethylen, monomerem Buten-(1) und Wasserstoff hält,

d) die Menge an Wasserstoff im Reaktionsgemisch im Bereich von 0,1 bis 1,5, vorzugsweise 0,2 bis 0,4 Mol Wasserstoff pro 100 Mol der im Reaktionsgemisch enthaltenen Gesamtmolmenge von iso-Butan, monomerem Ethylen, monomerem Buten-(1) und Wasserstoff hält,

e) die Menge an Copolymerisat im Reaktionsgemisch im Bereich von 25 bis 35, vorzugsweise 28 bis 30 Gramm Copolymerisat pro 100 Gramm Reaktionsgemisch hält,

f) im Temperaturbereich von 50 bis 90, vorzugsweise 60 bis 75-C copolymerisiert, und

g) unter einem Gesamtdruck des Reaktionsgemisches im Bereich von 28 bis 42, vorzugsweise 39 bis 41 bar arbeitet.

Charakteristisch - und von Vorteil - für die nach dem neuen Verfahren erhältichen Copolymerisate ist nicht nur, daß sie einen relativ niederen bis keinen Feinstkornanteil aufweisen, sondern auch, daß sie (i) eine relativ große Menge an Buten-(1) einpolymerisiert enthalten, nämlich auf 100 Mol Ethylen 3 bis 7, insbesondere 4 bis 6 Mol Buten-(1), (ii) ein niederes Schüttgewicht, nämlich 200 bis 350, insbesondere 240 bis 260 g/l (gemessen nach DIN 53 468) haben

sowie (iii) eine niedere Dichte, nämlich 0,910 bis 0,930, insbesondere 0,915 bis 0,925 g/cm$^3$ (gemessen nach DIN 53 479) besitzen.

Der Durchmesser der Einzelpartikel der erfindungsgemäß erhältlichen Copolymerisate beträgt - unter zugleich bemerkenswert guter Korngrößenverteilung - im allgemeinen 0,1 bis 2,0, insbesondere 0,2 bis 1 mm; er liegt damit in einem für die Weiterverarbeitung besonders günstigen Bereich.

Zu dem neuen Verfahren ist im einzelnen das Folgende zu sagen:

Es ist seiner Spezies nach ein Verfahren zum kontinuierlichen Herstellen partikelförmiger Polymerisate von α-Monoolefinen durch katalytische Polymerisation der α-Monoolefine in einem flüssig vorliegenden Alkan - worin sich die zu polymerisierenden Monomeren in gelöster Form, das gebildete partikelförmige Polymerisat in suspendierter Form befinden - als Reaktionsmedium, mittels eines Ziegler-Katalysatorsystems aus (1) einer Titan enthaltenden Komponente sowie (2) einem Aluminiumtrialkyl, in Gegenwart von Wasserstoff als Molekulargewichtsregler bei erhöhter Temperatur sowie erhöhtem Druck unter Führen des Reaktionsgemischs als Kreisstrom, welchem die Ausgangsstoffe zugegeben werden und das gebildete partikelförmige Copolymerisat entzogen wird; - wobei die Zugabe der Ausgangsstoffe und der Entzug der Polymerisate jeweils kontinuierlich oder taktweise erfolgen kann.

Insoweit - also seiner Spezies nach - weist das erfindungsgemäße Verfahren keine Besonderheiten auf und kann in einschlägig üblicher Weise durchgeführt werden (vgl. dazu etwa die vier eingangs zitierten Patentschriften); - womit sich nähere Ausführungen hierzu erübrigen.

Demgegenüber liegt die Besonderheit des neuen Verfahrens in der Summe der folgenden sieben Kriterien:

a) Als Reaktionsmedium wird iso-Butan eingesetzt.

b) Die Menge an monomerem Ethylen im Reaktionsgemisch wird im Bereich von 6 bis 15, vorzugsweise 12 bis 14 Mol Ethylen pro 100 Mol der im Reaktionsgemisch enthaltenen Gesamtmolmenge von iso-Butan, monomerem Ethylen, monomerem Buten-(1) und Wasserstoff gehalten.

c) Die Menge an monomerem Buten-(1) im Reaktionsgemisch wird im Bereich von 20 bis 35, vorzugsweise 28 bis 32 Mol Buten-(1) pro 100 Mol der im Reaktionsgemisch enthaltenen Gesamtmolmenge von iso-Butan, monomerem Ethylen, monomerem Buten-(1) und Wasserstoff gehalten.

d) Die Menge an Wasserstoff im Reaktionsgemisch wird im Bereich von 0,1 bis 1,5, vorzugsweise 0,2 bis 0,4 Mol Wasserstoff pro 100 Mol der im Reaktionsgemisch enthaltenen Gesamtmolmenge von iso-Butan, monomerem Ethylen, monomerem Buten-(1) und Wasserstoff gehalten.

e) Die Menge an Copolymerisat im Reaktionsgemisch wird im Bereich von 25 bis 35, vorzugsweise 28 bis 30 Gramm Copolymerisat pro 100 g Reaktionsgemisch gehalten.

f) Es wird im Temperaturbereich von 50 bis 90, vorzugsweise 60 bis 75°C copolymerisiert.

g) Es wird unter einem Gesamtdruck des Reaktionsgemisches im Bereich von 28 bis 42, vorzugsweise 39 bis 41 bar gearbeitet.

Die Summe dieser sieben speziellen Kriterien hebt das erfindungsgemäße Verfahren von den bekannten Verfahren der gleichen Gattung ab.

Ein weiteres, zusätzliches achtes Kriterium ist geeignet, das neue Verfahren so auszugestalten, daß besonders gute Ergebnisse erhalten werden.

Dieses Kriterium besteht im Einsatz eines Ziegler-Katalysatorsystems aus (1) einer Titan enthaltenden Komponente sowie (2) einem Aluminiumtrialkyl mit $C_2$- bis $C_8$-Alkylgruppen - unter der Maßgabe, daß das Atomverhältnis Titan in (1): Aluminium in (2) 1:5 bis 1:40, vorzugsweise 1:10 bis 1:30 beträgt -, wobei die Titan enthaltende Komponente (1) das festphasige Produkt (VI) ist, das erhalten worden ist, indem man

(1.1) zunächst

(1.1.1) einen feinteiligen porösen anorganischoxidischen Stoff (I), der einen Teilchendurchmesser von 1 bis 1000, vorzugsweise 1 bis 400µm ein Porenvolumen von 0 3 bis 3 vorzugsweise 1 bis 2,5 cm$^3$/g sowie eine Oberfläche von 100 bis 1.000, vorzugsweise 200 bis 400 m$^2$/g besitzt und die Formel $SiO_2.zAl_2O_3$ - worin z steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gewichtsteilen eines Alkanols mit $C_1$- bis $C_3$-Alkyl-gruppen,

(IIb) 0,02 bis 6, vorzugsweise 0,04 bis 3,5 Gewichtsteilen (gerechnet als Titan) einer Titanverbindung der Formel

$TiCl_3 \cdot \frac{1}{3}AlCl_3$, sowie

(IIc) 0,01 bis 4, vorzugsweise 0,04 bis 2,5 Gewichtsteilen (gerechnet als Magnesium) Magnesiumchlorid,

miteinander in Berührung bringt unter Bildung einer Dispersion (III), mit der Maßgabe, daß das Gewichtsverhältnis anorganisch-oxidischer Stoff (I): Titan in der Titanverbindung (IIb) im Bereich von 1:0,03 bis 1:0,3, vorzugsweise von 1:0,1 bis 1:0,2, und das Gewichtsverhältnis anorganisch-oxidischer Stoff (I): Magnesium in dem Magnesiumchlorid (IIc) im Bereich von 1:0,05 bis 1:0,5, vorzugsweise von 1:0,1 bis 1:0,3 liegt; die Dispersion (III) bei einer Temperatur, die unterhalb von 200, vorzugsweise unterhalb von 160°C und oberhalb des Schmelzpunktes des verwendeten Alkanols (IIa) liegt, bis zur trockenen Konsistenz - Bildung eines festphasigen Zwischenprodukts (IV) - eindampft und

(1.2) dann

(1.2.1) das aus Stufe (1.1) erhaltene festphasige Zwischenprodukt (IV) und

(1.2.2) ein in einem flüssigen Alkan gelöstes Alkylaluminiumchlorid (V) der Formel

```
X-Al-Cl,
  '
  R
```

worin stehen

X für R oder Cl, vorzugsweise R, und

R für einen $C_2$- bis $C_8$-Alkylrest,

miteinander in Berührung bringt unter Bildung einer Dispersion, mit der Maßgabe, daß das Gewichtsverhältnis festphasiges Zwischenprodukt (IV): Alkylaluminiumchlorid (V) im Bereich von 1:0,05 bis 1:2, vorzugsweise 1:0,1 bis 1:1 liegt; - wobei das dabei als Dispergiertes resultierende festphasige Produkt (VI) die Titan enthaltende Komponente (1) des Katalysatorsystems ist.

Ziegler-Katalysatorsysteme der im Vorstehenden abgehandelten Art sind bekannt und in allen Einzelheiten näher beschrieben, z.B. in der GB-PS 1 601 418; - womit sich an dieser Stelle nähere Ausführungen erübrigen.

**Beispiel**

A) Herstellung der Titan enthaltenden Komponente (1) des Ziegler-Katalysatorsystems:

Stufe (1.1)

Es wurde ausgegangen von einer Suspension aus 25 Gewichtsteilen feinteiligen Siliciumdioxids ($SiO_2$, Teilchendurchmesser: 50 bis 150μm, Porenvolumen: 2,0 $cm^3/g$, Oberfläche 310 $m^2/g$) in 70 Gewichtsteilen Methanol. Diese Suspension wurde mit einer Lösung von 4 Gewichtsteilen

$TiCl_3 \cdot \frac{1}{3}AlCl_3$

(= ca. 1 Gewichtsteil Titan) und 6 Gewichtsteilen Magnesiumchlorid (= ca. 1,25 Gewichtsteilen Magnesium) in 100 Gewichtsteilen Methanol vereinigt. Die dabei erhaltene Suspension wurde dann 60 Minuten bei einer Temperatur von 50° C gerührt, worauf das gebildete festphasige Zwischenprodukt (IV) durch Abtreiben der flüchtigen Bestandteile in einem Rotationsverdampfer isoliert wurde der bis zu einem Betriebsdruck von 20 Torr und einer Betriebstemperatur von 85° C gebracht worden war. Die Analyse des erhaltenen Zwischenprodukts (IV) ergab einen Gehalt an Titan von ca. 2,3 Gewichtsprozent.

Stufe (1.2)

10 Gewichtsteile des in Stufe (1.1) gewonnenen festphasigen Zwischenprodukts (IV) wurden in 50 Gewichtsteilen Heptan suspendiert, worauf diese Suspension bei einer Temperatur von 50° C mit einer Lösung aus 2,5 Gewichtsteilen Diethylaluminiumchlorid in 20 Gewichtsteilen Heptan versetzt und das Ganze 2 Stunden bei der genannten Temperatur gerührt wurde. Anschließend wurde filtriert, dreimal mit Heptan gewaschen und im Vakuum getrocknet. Die Analyse des so erhaltenen festphasigen Produkts (VI) - d.h. der Titan enthaltenden Komponente (1) - ergab einen Gehalt an Titan von etwa 1,8 Gewichtsprozent.

B) Copolymerisation von Ethylen und Buten-(1)

Die Ethylen-Buten-(1)-Copolymerisation erfolgte in gleicher Weise wie die Ethylen-Homopolymerisation gemäß Beispiel 1 der US-PS 4 007 321, jedoch mit den folgenden Abwandlungen:

a) Als Reaktionsmedium wurde iso-Butan eingesetzt.

b) Die Menge an monomerem Ethylen im Reaktionsgemisch wurde konstant auf 12 Mol Ethylen pro 100 Mol der im Reaktionsgemisch enthaltenen Gesamtmolmenge von iso-Butan, monomerem Ethylen, monomerem Buten-(1) und Wasserstoff gehalten.

c) Die Menge an monomerem Buten-(1) im Reaktionsgemisch wurde konstant auf 30 Mol Buten-(1) pro 100 Mol der im Reaktionsgemisch enthaltenen Gesamtmolmenge von iso-Butan, monomerem Ethylen, monomerem Buten-(1) und Wasserstoff gehalten.

d) Die Menge an Wasserstoff im Reaktionsgemisch wurde konstant auf 0,24 Mol Wasserstoff pro 100 Mol der im Reaktionsgemisch enthaltenen Gesamtmolmenge von iso-Butan, monomerem Ethylen, monomerem Buten-(1) und Wasserstoff gehalten.

e) Die Menge an Copolymerisat im Reaktionsgemisch wurde konstant auf 30 Gramm Copolymerisat pro 100 Gramm Reaktionsgemisch gehalten.

f) Es wurde bei einer Temperatur von 75° C copolymerisiert.

g) Es wurde unter einem Gesamtdruck des Reaktionsgemisches von 40 bar gearbeitet.

h ) Es wurde eingesetzt ein Ziegler-Katalysatorsystem aus (1) 125 g/h der oben unter (A) beschriebenen Titan enthaltenden Komponente sowie (2) 88 g/h Aluminiumtriethyl; - entsprechend einem Atomverhältnis Titan in (1): Aluminium in (2) von 1:20.

Auf diese Weise wurden 400 kg/h eines partikelförmigen Ethylen-Buten-(1)-Copolymerisats erhalten, das auf 100 Mol Ethylen 5,5 Mol Buten-(1) einpolymerisiert enthielt, ein Schüttgewicht von 255 [g/l] nach DIN 53 468 hatte sowie eine Dichte von 0,920 [g/$cm^3$] nach DIN 53 479 besaß.

Das Copolymerisat war praktisch frei von Partikeln, die einen Durchmesser von weniger als 0,2 mm hatten; die Siebanalyse des Copolymerisats ergab:

| Partikel-Ø[mm] | Anteil [mm] |
|---|---|
| ∫ 2,0 | 0,8 |
| 2,0 - 1,6 | 4,5 |
| 1,6 - 1,0 | 34,0 |
| 1,0 - 0,8 | 22,3 |

| | | |
|---|---|---|
| 0,8 - 0,5 | 27,0 | |
| 0,5 - 0,2 | 11,4 | |
| < 0,2 | 0 | |
| | 100,0 | |

**Patentanspruch**

Verfahren zum kontinuierlichen Herstellen partikelförmiger Ethylen-Buten-(1)-Copolymerisate durch katalytische Copolymerisation von Ethylen und Buten-(1) in einem flüssig vorliegenden Alkan - worin sich die zu polymerisierenden Monomeren in gelöster Form, das gebildete partikelförmige Copolymerisat in suspendierter Form befinden - als Reaktionsmedium, mittels eines Ziegler-Katalysatorsystems aus (1) einer Titan enthaltenden Komponente sowie (2) einem Aluminiumtrialkyl, in Gegenwart von Wasserstoff als Molekulargewichtsregler bei erhöhter Temperatur sowie erhöhtem Druck unter Führen des Reaktionsgemischs als Kreisstrom, welchem die Ausgangsstoffe zugegeben werden und das gebildete partikelförmige Copolymerisat entzogen wird, dadurch gekennzeichnet, daß man

a) als Reaktionsmedium iso-Butan einsetzt,

b) die Menge an monomerem Ethylen im Reaktionsgemisch im Bereich von 6 bis 15 Mol Ethylen pro 100 Mol der im Reaktionsgemisch enthaltenen Gesamtmolmenge von iso-Butan, monomerem Ethylen, monomerem Buten-(1) und Wasserstoff hält,

c) die Menge an monomeren Buten-(1) im Reaktionsgemisch im Bereich von 20 bis 35 Mol Buten-(1) pro 100 Mol der im Reaktionsgemisch enthaltenen Gesamtmolmenge von iso-Butan, monomerem Ethylen, monomerem Buten-(1) und Wasserstoff hält,

d) die Menge an Wasserstoff im Reaktionsgemisch im Bereich von 0,1 bis 1,5 Mol Wasserstoff pro 100 Mol der im Reaktionsgemisch enthaltenen Gesamtmolmenge von iso-Butan, monomerem Ethylen, monomerem Buten-(1) und Wasserstoff hält,

e) die Menge an Copolymerisat im Reaktionsgemisch im Bereich von 25 bis 35 Gramm Copolymerisat pro 100 Gramm Reaktionsgemisch hält,

f) im Temperaturbereich von 50 bis 90° C copolymerisiert, und

g) unter einem Gesamtdruck des Reaktionsgemisches im Bereich von 28 bis 42 bar arbeitet.

**Claim**

A process for the continuous production of particulate ethyl-ene/butene-1 copolymers by catalytic polymerization of ethylene and butene-1 in a liquid alkane - in which the monomers to be polymerized are present in dissolved form, and the particulate copolymer formed is present in suspended form as reaction medium, using a Ziegler catalyst system consisting of (1) a titanium-containing component and (2) an aluminium trialkyl, in the presence of hydrogen as molecular weight regulator at elevated temperature and under elevated pressure, while circulating the reaction mixture in a loop to which the starting materials are added, and from which the particulate copolymer formed is removed, wherein

(a) isobutane is used as the reaction medium,

(b) the amount of monomeric ethylene in the reaction mixture is kept within a range of 6 to 15 moles per 100 moles of the total molar amount of isobutane, monomeric ethylene, monomeric butene-1 and hydrogen contained in the reaction mixture,

(c) the amount of monomeric butene-1 in the reaction mixture is kept within a range of 20 to 35 moles per 100 moles of the total molar amount of isobutane, monomeric ethylene, monomeric butene-1 and hydrogen contained in the reaction mixture,

(d) the amount of hydrogen in the reaction mixture is kept within a range of 0.1 to 1.5 moles per 100 moles of the total molar amount of isobutane, monomeric ethylene, monomeric butene-1 and hydrogen contained in the reaction mixture,

(e) the amount of copolymer in the reaction mixture is kept within a range of 25 to 35 g per 100 g of reaction mixture,

(f) copolymerization is effected at a temperature of from 50 to 90° C, and

(g) the reaction is carried out under a total pressure of the reaction mixture of from 28 to 42 bars.

**Revendication**

Procédé pour la préparation en continu de copolymères de l'éthylène et du butène-1 en particules par une copolymérisation catalysée de l'éthylène et du butène-1, le milieu réactionnel étant un alcane à l'état liquide, dans lequel les monomères à polymériser sont dissous et dans lequel le copolymère particulaire formé est en suspension, en présence d'un système catalytique selon Ziegler, formé d'une composante au titane (1) et d'un dérivé de trialcoylaluminium (2), à température et sous pression accrues, en présence d'hydrogène comme régulateur du poids moléculaire, les composés de départ étant introduits dans et le copolymère particulaire formé séparé du mélange réactionnel circulant en circuit fermé, caractérisé en ce que:

a) l'iso-butane est employé comme milieu réactionnel,

b) la proportion de l'éthylène monomère dans le mélange réactionnel est réglée dans la gamme

de 6 à 15 moles pour 100 moles de la quantité molaire totale en isobutane, en éthylène monomère, en butène-1 monomère et en hydrogène, contenue dans le mélange réactionnel,

c) la proportion du butène-1 monomère dans le mélange réactionnel est maintenue dans la gamme de 20 à 35 moles pour 100 moles de la quantité molaire totale en iso-butane, en éthylène monomère, en butène-1 monomère et en hydrogène, contenue dans le mélange réactionnel,

d) la proportion de l'hydrogène dans le mélange réactionnel est réglée entre 0,1 et 1,5 mole pour 100 moles de la quantité molaire totale en iso-butane, en éthylène monomère, en butène-1 monomère et en hydrogène, contenue dans le mélange réactionnel,

e) la proportion du copolymère dans le mélange réactionnel est maintenue dans la gamme de 25 à 35 g pour 100 g de mélange réactionnel,

f) la copolymérisation est effectuée dans a gamme de 50 à 90° C et

g) le mélange réactionnel est soumis à une pression totale comprise entre 28 et 42 bars.